# EUROPÄISCHE PATENTSCHRIFT

(11) **EP 2 228 180 B1**
(45) Veröffentlichungstag und Bekanntmachung des Hinweises auf die Patenterteilung: **23.05.2012**
(21) Anmeldenummer: 10002250.8
(22) Anmeldetag: 04.03.2010
(51) Int. Cl.: B25J 13/06, B25J 9/16

(54) **Vorrichtung und Verfahren zum Betreiben eines Roboters**
Device and method for operating a robot
Dispositif et procédé de fonctionnement d'un robot

(30) Priorität: 09.03.2009 DE 102009012328
(43) Veröffentlichungstag der Anmeldung: 15.09.2010
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A1- 1 842 631
- US-A1- 2003 120 391

## Beschreibung

Die vorliegende Erfindung betrifft eine Vorrichtung gemäß dem Oberbegriff des Anspruchs 1 zum Betreiben, insbesondere Steuern, eines Roboters mit einem Produktgreifer, die dazu ausgebildet ist, wenigstens eine Anfahrposition des Produktgreifers zum Aufnehmen und/oder Ablegen eines Produkts, insbesondere eines Lebensmittelprodukts, auf einer Anzeigeeinrichtung als ein graphisches Element darzustellen.

Eine solche Vorrichtung ist aus der US-A-2003 120 391 bekannt.

Es ist bekannt, einen Roboter in einer Schneidlinie mit einem Slicer zum Aufschneiden der Lebensmittelprodukte und mit einer dem Slicer nachgeordneten Verpackungsmaschine für die Herstellung verkaufsfertiger Portionspackungen in Förderrichtung gesehen zwischen diesen beiden Maschinen anzuordnen. Durch den Slicer wird das Lebensmittelprodukt zunächst in Produktscheiben aufgeschnitten, wobei jeweils mehrere Produktscheiben zu einer Portion des Lebensmittelprodukts zusammengefasst werden. Die Portionen werden dann mittels eines Einlaufbands zu dem Roboter transportiert, der eine Aufnahmeposition anfährt, um mit Hilfe des Produktgreifers die Portionen von dem Einlaufband aufzunehmen. Anschließend werden die Portionen jeweils an eine Zielposition auf der Verpackungsmaschine übergeben, wobei üblicherweise mehrere Zielpositionen gemäß einem Formatsatz vorgegeben sind. Darüber hinaus kann in der Regel auch ein Auslaufband angefahren werden, an das Portionen übergeben werden, die vorgegebene Anforderungen nicht erfüllen.

Die vorstehend genannten Anfahrpositionen des Produktgreifers des Roboters können auf einer Anzeigeeinrichtung jeweils als ein graphisches Element dargestellt werden, um ein Einstellen der Koordinaten der jeweiligen Anfahrposition zu ermöglichen. Hierzu kann das jeweilige graphische Element zunächst ausgewählt und anschließend können die Koordinaten für die jeweilige Anfahrposition über eine numerische Tastatur eingegeben werden. Hierzu muss die jeweilige Bedienperson jedoch mit dem von dem Roboter verwendeten Koordinatensystem vertraut sein.

Die EP-A-1 842 631 offenbart ein Verfahren zum Programmieren von Pick-and-Place-Robotern mittels einer Abfolge von Zielpunkten. Jeder Pfad aus mehreren Zielpunkten wird einer bestimmten Arbeitsstation zugeordnet und gemeinsam mit diesem auf einem Bildschirm dargestellt. Wenn das Symbol für die Arbeitsstation bewegt wird, wird der zugehörige Pfad auf dem Bildschirm mitbewegt.

Bei dem in der US-A-2003 120 391 offenbarten System werden die Zielpunkte eines Pick-and-Place-Roboters auf einem Bildschirm angezeigt und durch Drag & Drop-Operation festgelegt.

Der Erfindung liegt die Aufgabe zugrunde, das Einstellen der Koordinaten der jeweiligen Anfahrposition zu erleichtern, insbesondere eine Möglichkeit zu schaffen, die gewährleistet, dass das Einstellen der Koordinaten der jeweiligen Anfahrposition auch von einer im Umgang mit dem Roboter nicht eigens geschulten Bedienperson vorgenommen werden kann.

Die Lösung dieser Aufgabe erfolgt durch die Merkmale des Anspruchs 1.

Erfindungsgemäß steuert die Vorrichtung den Roboter derart, dass der Produktgreifer des Roboters nach einem Auswählen eines jeweiligen graphischen Elements zum Einstellen der Koordinaten der jeweiligen Anfahrposition und vor einer Verschiebung des graphischen Elements die jeweilige Anfahrposition einnimmt. Hierdurch kann vor einer Änderung der Anfahrposition des Produktgreifers des Roboters der Bedienperson die bislang eingestellte Anfahrposition angezeigt werden. Dies erleichtert der Bedienperson die Veränderung der Einstellung der Koordinaten, insbesondere deshalb, da die Relativstellung der gewünschten, neu einzustellenden Anfahrposition zu der bisherigen Anfahrposition veranschaulichbar ist.

Die erfindungsgemäße Vorrichtung - die insbesondere eine Steuerungsvorrichtung für den Roboter, eine graphische Benutzeroberfläche zur Interaktion einer Bedienperson mit der Vorrichtung und/oder die Anzeigeeinrichtung umfasst - ermöglicht, dass das jeweilige graphische Element unmittelbar, direkt und/oder manuell verschiebbar ist. Insbesondere erfolgt eine derartige Verschiebung vermöge einer an sich bekannten Drag&Drop-Funktion bzw. durch Ziehen des jeweiligen graphischen Elements über die Anzeigeeinrichtung.

Eine derartige Verschiebung bewirkt, dass automatisch die Koordinaten der jeweiligen Anfahrposition geändert werden, und zwar der Verschiebung entsprechend, d.h. eine Verschiebung der Anzeigeposition des graphischen Elements auf der Anzeigeeinrichtung führt automatisch zu einer entsprechenden Verschiebung der jeweiligen Anfahrposition des Produktgreifers des Roboters. Üblicherweise ist dabei der Betrag der Verschiebung der Anfahrposition des Produktgreifers des Roboters gegenüber dem Betrag der Verschiebung der Anzeigeposition des graphischen Elements um einen Skalierungsfaktor verschieden.

Somit können die Koordinaten der jeweiligen Anfahrposition schnell und einfach auch durch eine nicht speziell geschulte Bedienperson eingestellt oder verändert werden.

Die eingestellten Koordinaten der jeweiligen Anfahrposition werden dann insbesondere durch die erfindungsgemäße Vorrichtung in Steuerbefehle für den Roboter umgesetzt.

Das Einstellen oder Ändern der Koordinaten der jeweiligen Anfahrposition wird auch als Teachen der jeweiligen Anfahrposition bezeichnet.

Da es grundsätzlich möglich ist, dass der Produktgreifer in einer gewählten Anfahrposition eine beliebige Orientierung oder zumindest mehrere voneinander verschiedene Orientierungen einnehmen kann, können von dem Begriff "Koordinaten" auch ein oder mehrere Rotationsfreiheitsgrade umfasst sein.

Bei der Anzeigeeinrichtung handelt es sich insbesondere um eine berührungsempfindliche Anzeigeeinrichtung, insbesondere einen Touchscreen, wobei bevorzugt eine Verschiebung des jeweiligen graphischen Elements durch Berühren mit dem Finger des Benutzers oder einem Eingabestift erfolgt.

Grundsätzlich ist es möglich, dass zum unmittelbaren Verschieben des jeweiligen graphischen Elements die berührungsempfindliche Anzeigeeinrichtung nur zum Auswählen des jeweiligen graphischen Elements und zum Festlegen der Endposition der Anzeigeposition des graphischen Elements berührt wird. Bevorzugt erfolgt eine derartige Verschiebung des jeweiligen graphischen Elements jedoch vermöge einer kontinuierlich berührenden Bewegung über die Anzeigeeinrichtung.

Die Veränderung der Einstellung der Koordinaten kann dadurch weiter vereinfacht werden, dass die Vorrichtung den Roboter derart steuert, dass der Produktgreifer des Roboters während der Verschiebung eine der Verschiebung entsprechende Bewegung ausführt. Die Bedienperson kann daher insbesondere ohne Zeitverzögerung bzw. in Echtzeit die unmittelbare Auswirkung der Verschiebung des jeweiligen graphischen Elements auf der Anzeigeeinrichtung auf die jeweilige Anfahrposition verfolgen.

Zur Berücksichtigung eines Formatsatzes sind bevorzugt mehrere Anfahrpositionen zum Ablegen von Produkten jeweils als ein graphisches Element auf der Anzeigeeinrichtung darstellbar, wobei bevorzugt die auf der Anzeigeeinrichtung dargestellte relative Anordnung der mehreren graphischen Elemente zueinander einer maßstäblichen Darstellung der relativen Lage der mehreren Anfahrpositionen zueinander entspricht.

Insbesondere für eine Feinjustierung der jeweiligen Anfahrposition sind die Koordinaten einer jeweiligen Anfahrposition zusätzlich über eine auf der Anzeigeeinrichtung darstellbare virtuelle Pfeil-Tastatur und/oder eine numerische Tastatur einstellbar.

Weitere bevorzugte Ausführungsformen der erfindungsgemäßen Vorrichtung ergeben sich aus der Figurenbeschreibung, der Zeichnung und den Unteransprüchen.

Die Erfindung betrifft ferner einen Roboter mit einem Produktgreifer und einer Vorrichtung, wie sie vorstehend erläutert ist.

Darüber hinaus betrifft die vorliegende Erfindung ein Verfahren gemäß Anspruch 10 zum Betreiben eines Roboters mit einem Produktgreifer.

Vorteilhafte Ausführungsformen des erfindungsgemäßen Verfahrens ergeben sich in analoger Weise aus den bevorzugten Ausführungsformen der erfindungsgemäßen Vorrichtung.

Weiterer Gegenstand der Erfindung ist ein Computerprogramm mit Programmcode-Mitteln, um das vorstehend erläuterte Verfahren durchzuführen, wenn das Programm auf einem Computer ausgeführt wird.

Außerdem ist Gegenstand der vorliegenden Erfindung ein Computerprogrammprodukt mit Programmcode-Mitteln, die auf einem computerlesbaren Datenträger gespeichert sind, um das vorstehend erläuterte Verfahren durchzuführen, wenn das Computerprogramm auf einem Computer ausgeführt wird.

Ein nicht beschränkendes Ausführungsbeispiel der Erfindung ist in der Zeichnung dargestellt und wird nachfolgend beschrieben.

Es zeigen, jeweils in schematischer Darstellung,
- Fig. 1: eine Schneidlinie mit einem Slicer zum Aufschneiden von Lebensmittelprodukten, mit einem Pick-and-Place-Roboter und mit einer Verpackungsmaschine, und
- Fig. 2: einen Screenshot des graphischen Bildschirminhalts der gra- phischen Benutzeroberfläche eines als Computerprogramm implementierten Formatdesigners zum Einstellen der Koordi- naten der Anfahrpositionen des Pick-and-Place-Roboters aus Fig. 1.

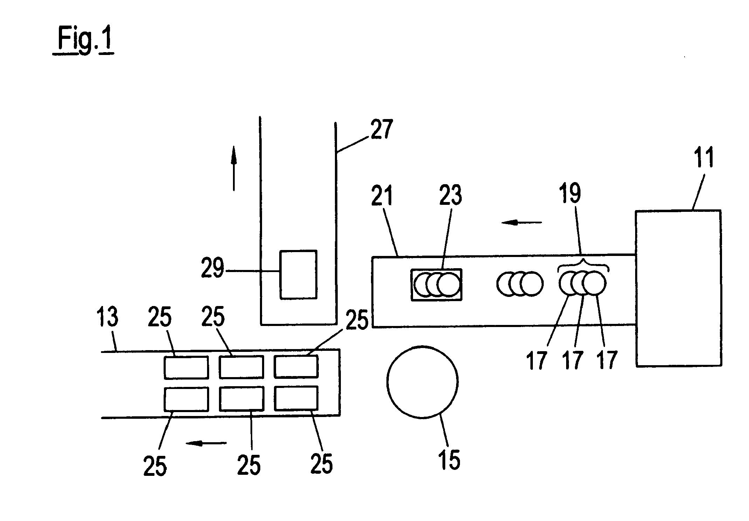

Die in Fig. 1 dargestellte Schneidlinie umfasst einen Slicer 11 zum Aufschneiden von Wurst, Käse, Schinken und dergleichen sowie eine dem Slicer 11 nachgeordnete Verpackungsmaschine 13, von der lediglich ein Förderband dargestellt ist. Zwischen dem Slicer 11 und der Verpackungsmaschine 13 ist ein Pick-and-Place-Roboter 15 angeordnet. Der Slicer 11 ist dafür vorgesehen, das jeweilige Lebensmittelprodukt in Produktscheiben 17 aufzuschneiden, wobei jeweils mehrere Produktscheiben 17 zu einer Portion 19 zusammengefasst werden.

Zum Transport der Portionen 19 von dem Slicer 11 zu dem Pick-and-Place-Roboter 15 ist ein Einlaufband 21 vorgesehen. Der Pick-and-Place-Roboter 15, der einen Produktgreifer aufweist, ist dazu ausgelegt, die Portionen 19 von dem Einlaufband 21 aufzunehmen, sobald diese eine Aufnahmeposition 23 erreicht haben.

Anschließend werden die aufgenommenen Portionen 19 an die Verpackungsmaschine 13 übergeben. Dort sind sechs Zielpositionen 25 vorgegeben, die zusammen einen Formatsatz definieren und an denen jeweils eine Verpackungsschale bereitgestellt ist, in die jeweils eine Portion 19 abgelegt wird, wobei die Verpackungsschalen zu diesem Zeitpunkt noch miteinander verbunden sind und erst später vereinzelt werden. Die Anzahl und Lage der Zielpositionen 25 in Fig. 1 ist lediglich beispielhaft gewählt. Sobald an jeder der Zielpositionen 25 eine Portion 19 abgelegt ist, werden die abgelegten Portionen 19 zur weiteren Verarbeitung weitertransportiert.

Darüber hinaus ist ein Auslaufband 27 vorgesehen, an das von dem Pick-and-Place-Roboter 15 solche Portionen 19 übergeben werden, die vorgegebene Anforderungen nicht erfüllen, wobei solche Portionen 19 an einer Ablageposition 29 abgelegt werden. Beispielsweise können hier Schinken-Portionen abgelegt werden, die einen zu hohen Fettgehalt aufweisen.

Der Pick-and-Place-Roboter 15 umfasst eine programmgesteuerte Steuerungsvorrichtung, die eine Software-Komponente ausführt, deren graphische Benutzeroberfläche auf einer als Touchscreen ausgebildeten Anzeigeeinrichtung 31 darstellbar ist, über die die Koordinaten der Anfahrpositionen, nämlich der Aufnahmeposition 23, der Zielpositionen 25 und der Ablageposition 29, einstellbar sind.

Die eine jeweilige Anfahrposition 23, 25, 29 kennzeichnenden Koordinaten können beispielsweise durch die Koordinaten des geometrischen Schwerpunkts oder eines der Eckpunkte der als Viereck dargestellten jeweiligen Anfahrposition 23, 25, 29 gegeben sein.

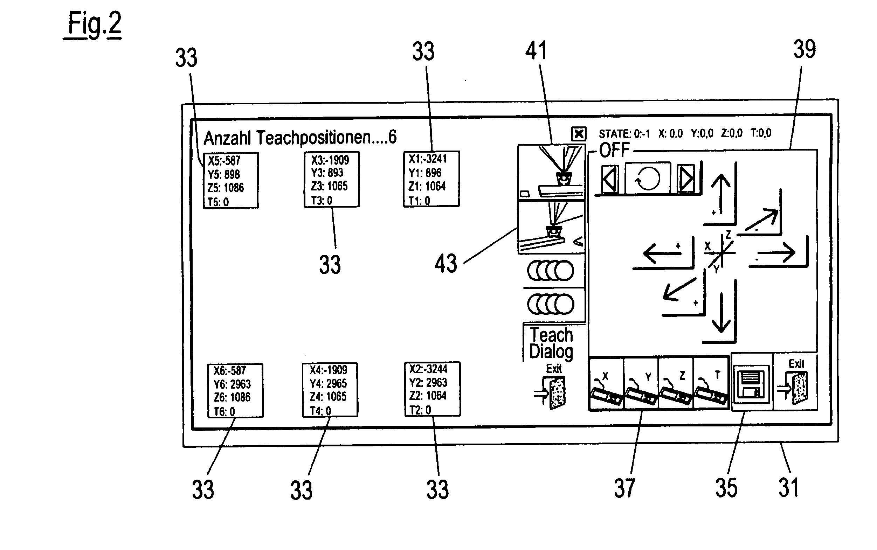

Der in Fig. 2 dargestellte graphische Bildinhalt umfasst sechs graphische Elemente 33, die jeweils eine der Zielpositionen 25 repräsentieren. Die auf der Anzeigeeinrichtung 31 dargestellte relative Anordnung der graphischen Elemente 33 zueinander entspricht dabei einer maßstäblichen Darstellung der relativen Lage der Zielpositionen 25 zueinander. In den graphischen Elementen 33 werden die Koordinaten der jeweiligen zugeordneten Zielposition 25 angezeigt. Bei den Koordinaten handelt es sich um die Raumkoordinaten X, Y, Z sowie einen Drehwinkel T um die Z-Achse.

Die Bedienperson des Pick-and-Place-Roboters 15 kann die Koordinaten der Zielpositionen 25 dadurch einstellen, dass das jeweilige graphische Element 33 durch Antippen ausgewählt und anschließend an die jeweils gewünschte Position gezogen wird. Durch Tippen auf die Schaltfläche 35 kann diese Position gespeichert werden. Entsprechend der Verschiebung des jeweiligen graphischen Elements 33 werden die Koordinaten der jeweiligen Zielposition 25 automatisch geändert. Wird beispielsweise das graphische Element 33 mit den Koordinaten X1, Y1, Z1, T1 in Fig. 2 nach unten gezogen, wird die Koordinate Y1 automatisch entsprechend geändert.

Um der Bedienperson das Einstellen der gewünschten Koordinaten der jeweiligen Zielposition 25 zu erleichtern, nimmt der Produktgreifer des Pick-and-Place-Roboters 15 nach dem Auswählen des jeweiligen graphischen Elements 33 die jeweilige zugehörige Zielposition 25 ein. Beim Ziehen des jeweiligen graphischen Elements 33 über die Anzeigeeinrichtung 31 führt der Produktgreifer des Pick-and-Place-Roboters 15 eine der Verschiebung auf der Anzeigeeinrichtung 31 entsprechende Bewegung aus. Die Bedienperson kann die Auswirkungen einer von ihr an der Anzeigeeinrichtung 31 durchgeführten Änderung daher unmittelbar an der Zielposition 25 des Produktgreifers des Pick-and-Place-Roboters 15 kontrollieren.

Zur Feinjustierung der eingestellten Zielposition 25 kann die Bedienperson auf eine Schaltfläche des Schaltfelds 37 tippen, wodurch eine numerische Tastatur geöffnet wird, über die die Koordinaten der jeweiligen Zielposition 25 direkt eingegeben werden. Darüber hinaus ist auch noch ein Schaltfeld 39 mit einer virtuellen Pfeil-Tastatur vorgesehen, über die ebenfalls das Einstellen der jeweiligen Zielposition 25 möglich ist.

Durch Antippen der Schaltfläche 41 bzw. 43 kann die Aufnahmeposition 23 bzw. die Ablageposition 29 ebenfalls als graphisches Element dargestellt werden (nicht gezeigt), wobei die Koordinaten der Aufnahmeposition 23 bzw. der Ablageposition 29 zumindest über die Schaltfelder 37 und 39, ggf. auch über ein unmittelbares Verschieben des jeweiligen graphischen Elements, wie es vorstehend zu den Zielpositionen 25 erläutert ist, einstellbar sind.

Das erfindungsgemäße Einstellen der jeweiligen Anfahrposition durch Ziehen des jeweiligen graphischen Elements kann auch von ungeschultem Bedienpersonal ausgeführt werden.

### Bezugszeichenliste

- 11: Slicer
- 13: Verpackungsmaschine
- 15: Pick-and-Place-Roboter
- 17: Produktscheibe
- 19: Portion
- 21: Einlaufband
- 23: Aufnahmeposition
- 25: Zielposition
- 27: Auslaufband
- 29: Ablageposition
- 31: Anzeigeeinrichtung
- 33: graphisches Element
- 35: Schaltfläche
- 37: Schaltfeld
- 39: Schaltfeld
- 41: Schaltfläche

## Patentansprüche

1. Vorrichtung zum Betreiben eines Roboters (15) mit einem Produktgreifer, die dazu ausgebildet ist, wenigstens eine Anfahrposition (23, 25, 29) des Produktgreifers zum Aufnehmen und/oder Ablegen eines Produkts (19) auf einer Anzeigeeinrichtung (31) als ein graphisches Element (33) darzustellen, wobei
die Vorrichtung so ausgebildet ist, dass zum Einstellen der Koordinaten der jeweiligen Anfahrposition (23, 25, 29) das jeweilige graphische Element (33) auf der Anzeigeeinrichtung (31) unmittelbar verschoben werden kann, wobei in Ansprechen auf eine derartige Verschiebung des graphischen Elements (33) die Koordinaten der jeweiligen Anfahrposition (23, 25, 29) der Verschiebung entsprechend automatisch geändert werden,
**dadurch gekennzeichnet, dass** die Vorrichtung den Roboter (15) derart steuert, dass der Produktgreifer des Roboters (15) nach einem Auswählen eines jeweiligen graphischen Elements (33) zum Einstellen der Koordinaten der jeweiligen Anfahrposition (23, 25, 29) und vor einer Verschiebung des graphischen Elements (33) die jeweilige Anfahrposition (23, 25, 29) einnimmt.

2. Vorrichtung nach Anspruch 1,
**dadurch gekennzeichnet,**
**dass** die Anzeigeeinrichtung als eine berührungsempfindliche Anzeigeeinrichtung (31), insbesondere als ein Touchscreen, ausgebildet ist.

3. Vorrichtung nach Anspruch 2,
**dadurch gekennzeichnet,**
**dass** eine Verschiebung des jeweiligen graphischen Elements (33) durch Berühren mit dem Finger des Benutzers oder einem Eingabestift erfolgt.

4. Vorrichtung nach Anspruch 2 oder 3,
**dadurch gekennzeichnet,**
**dass** eine derartige Verschiebung des jeweiligen graphischen Elements (33) vermöge einer kontinuierlich berührenden Bewegung über die Anzeigeeinrichtung (31) erfolgt.

5. Vorrichtung nach einem der vorstehenden Ansprüche,
**dadurch gekennzeichnet,**
**dass** die Vorrichtung den Roboter (15) derart steuert, dass der Produktgreifer des Roboters (15) während der Verschiebung eine der Verschiebung entsprechende Bewegung ausführt.

6. Vorrichtung nach einem der vorstehenden Ansprüche,
**dadurch gekennzeichnet,**
**dass** mehrere Anfahrpositionen (25) zum Ablegen von Produkten (19) jeweils als ein graphisches Element (33) auf der Anzeigeeinrichtung (31) darstellbar sind.

7. Vorrichtung nach Anspruch 6,
**dadurch gekennzeichnet,**
**dass** die auf der Anzeigeeinrichtung (31) dargestellte relative Anordnung der mehreren graphischen Elemente (33) zueinander einer maßstäblichen Darstellung der relativen Lage der mehreren Anfahrpositionen (25) zueinander entspricht.

8. Vorrichtung nach einem der vorstehenden Ansprüche,
**dadurch gekennzeichnet,**
**dass** die Koordinaten einer jeweiligen Anfahrposition (23, 25, 29) zusätzlich über eine auf der Anzeigeeinrichtung (31) darstellbare virtuelle Pfeil-Tastatur (39) und/oder eine numerische Tastatur einstellbar sind.

9. Roboter (15) mit einem Produktgreifer und einer Vorrichtung nach einem der vorstehenden Ansprüche.

10. Verfahren zum Betreiben eines lebensmittelhandhabenden Roboters (15) mit einem Produktgreifer, bei dem wenigstens eine Anfahrposition (23, 25, 29) des Produktgreifers zum Aufnehmen und/oder Ablegen eines Produkts (19) auf einer Anzeigeeinrichtung (31) als ein graphisches Element (33) dargestellt wird, wobei
zum Einstellen der Koordinaten der jeweiligen Anfahrposition (23, 25, 29) das jeweilige graphische Element (33) auf der Anzeigeeinrichtung (31) unmittelbar verschoben werden kann, wobei in Ansprechen auf eine derartige Verschiebung des graphischen Elements (33) die Koordinaten der jeweiligen Anfahrposition (23, 25, 29) der Verschiebung entsprechend automatisch geändert werden,
**dadurch gekennzeichnet, dass** der Roboter (15) derart gesteuert wird, dass der Produktgreifer des Roboters (15) nach einem Auswählen eines jeweiligen graphischen Elements (33) zum Einstellen der Koordinaten der jeweiligen Anfahrposition (23, 25, 29) und vor einer Verschiebung des graphischen Elements (33) die jeweilige Anfahrposition (23, 25, 29) einnimmt.

11. Computerprogramm mit Programmcode-Mitteln, um das Verfahren nach Anspruch 10 durchzuführen, wenn das Programm auf einem Computer ausgeführt wird.

12. Computerprogrammprodukt mit Programmcode-Mitteln, die auf einem computerlesbaren Datenträger gespeichert sind, um das Verfahren nach Anspruch 10 durchzuführen, wenn das Computerprogramm auf einem Computer ausgeführt wird.

## Claims

1. An apparatus for the operation of a robot (15) having a product gripper which is designed to represent at least one approach position (23, 25, 29) of the product gripper for the picking up and/or placing down of a product (19) as a graphical element (33) on a display device (31), wherein the apparatus is designed so that the respective graphical element (33) can be directly displaced on the display device (31) for the setting of the coordinates of the respective approach position (23, 25, 29), with the coordinates of the respective approach position (23, 25, 29) being changed automatically in response to such a displacement of the graphical element (33) in accordance with the displacement,
**characterized in that**
the apparatus controls the robot (15) such that the product gripper of the robot (15) adopts the respective approach position (23, 25, 29) after a selection of a respective graphical element (33) for the setting of the coordinates of the respective approach position (23, 25, 29) and before a displacement of the graphical element (33).

2. An apparatus in accordance with claim 1, **characterized in that** the display device is designed as a contact-sensitive display device (31), in particular as a touch screen.

3. An apparatus in accordance with claim 2, **characterized in that** a displacement of the respective graphical element (33) takes place by touching with the finger of the user or with an input pen.

4. An apparatus in accordance with claim 2 or claim 3, **characterized in that** such a displacement of the respective graphical element (33) takes place by virtue of a continuously touching movement over the display device (31).

5. An apparatus in accordance with any one of the preceding claims, **characterized in that** the apparatus controls the robot (15) such that the product gripper of the robot (15) carries out a movement corresponding to the displacement during the displacement.

6. An apparatus in accordance with any one of the preceding claims, **characterized in that** a plurality of approach positions (25) for the placing down of products (19) can in each case be represented as a graphical element (33) on the display device (31).

7. An apparatus in accordance with claim 6, **characterized in that** the relative mutual arrangement of the plurality of graphical elements (33) represented on the display device (31) corresponds to a representation to scale of the relative mutual location of the plurality of approach positions (25).

8. An apparatus in accordance with any one of the preceding claims, **characterized in that** the coordinates of a respective approach position (23, 25, 29) can additionally be set via a virtual arrow keypad (39) which can be represented on the display device (31) and/or via a numeric keypad.

9. A robot (15) having a product gripper and an apparatus in accordance with any one of the preceding claims.

10. A method for the operating of a food-handling robot (15) having a product gripper, wherein at least one approach position (23, 25, 29) of the product gripper for the picking up and/or placing down of a product (19) is represented as a graphical element (33) on a display device (31), wherein the respective graphical element (33) can be directly displaced on the display device (31) for the setting of the coordinates of the respective approach position (23, 25, 29), with the coordinates of the respective approach position (23, 25, 29) being changed automatically in response to such a displacement of the graphical element (33) in accordance with the displacement,
**characterized in that**
the robot (15) is controlled such that the product gripper of the robot (15) adopts the respective approach position (23, 25, 29) after a selection of a respective graphical element (33) for the setting of the coordinates of the respective approach position (23, 25, 29) and before a displacement of the graphical element (33).

11. A computer program having programming code means to carry out the method in accordance with claim 10 when the program is carried out on a computer.

12. A computer program product having programming code means which are stored on a computer-readable data carrier to carry out the method in accordance with claim 10 when the computer program is carried out on a computer.

## Revendications

1. Dispositif pour le fonctionnement d'un robot (15) comprenant un moyen de préhension de produit, qui est réalisé pour représenter au moins une position d'approche (23, 25, 29) du moyen de préhension pour prendre et/ou pour déposer un produit (19) sur un dispositif d'affichage (31) sous forme d'un élément graphique (33), dans lequel le dispositif est réalisé de telle façon que pour régler les coordonnées de la position d'approche respective (23, 25, 29), l'élément graphique respectif (33) peut être directement déplacé sur le dispositif d'affichage, et en réaction à un tel déplacement de l'élément graphique (33) les coordonnées de la position d'approche respective (23, 25, 29) sont modifiées automatiquement en correspondance du déplacement,
**caractérisé en ce que**
le dispositif commande le robot (15) de telle façon que le moyen de préhension de produit du robot (15) occupe la position d'approche respective (23, 25, 29) après une sélection d'un élément graphique respectif (33) pour régler les coordonnées de la position d'approche respective (23, 25, 29) et avant un déplacement de l'élément graphique (33).

2. Dispositif selon la revendication 1,
**caractérisé en ce que** le dispositif d'affichage est réalisé sous forme de dispositif d'affichage (31) sensible au contact, en particulier sous forme d'écran tactile.

3. Dispositif selon la revendication 2,
**caractérisé en ce qu'**un déplacement de l'élément graphique respectif (33) a lieu par contact avec le doigt de l'utilisateur ou avec un stylet d'entrée.

4. Dispositif selon la revendication 2 ou 3,
**caractérisé en ce qu'**un tel déplacement de l'élément graphique respectif (33) a lieu grâce à un déplacement avec contact continu via le dispositif d'affichage (31).

5. Dispositif selon l'une des revendications précédentes,
**caractérisé en ce que** le dispositif commande le robot (15) de telle façon que le moyen de préhension de produit du robot (15) exécute pendant le déplacement un mouvement correspondant au déplacement.

6. Dispositif selon l'une des revendications précédentes,
**caractérisé en ce que** plusieurs positions d'approche (25) pour la dépose de produits (19) peuvent être représentées respectivement sous forme d'un élément graphique (33) sur le dispositif d'affichage (31).

7. Dispositif selon la revendication 6,
**caractérisé en ce que** l'agencement relatif, représenté sur le dispositif d'affichage (31), des plusieurs éléments graphiques (33) les uns par rapport aux autres correspond à une représentation à l'échelle de la position relative des plusieurs positions d'approche (25) les unes par rapport aux autres.

8. Dispositif selon l'une des revendications précédentes,
**caractérisé en ce que** les coordonnées d'une position d'approche respective (23, 25, 29) peuvent être réglées en supplément via un clavier à flèches virtuel (39) susceptible d'être représenté sur le dispositif d'affichage (31) et/ou via un clavier numérique.

9. Robot (15) comprenant un moyen de préhension de produit et un dispositif selon l'une des revendications précédentes.

10. Procédé pour le fonctionnement d'un robot (15) qui manipule des produits alimentaires et comportant un moyen de préhension de produit, dans lequel au moins une position d'approche (23, 25, 29) du moyen de préhension de produit pour la prise et/ou la dépose d'un produit (19) est représentée sur un dispositif d'affichage (31) comme un élément graphique (33), dans lequel, pour régler les coordonnées de la position d'approche respective (23, 25, 29) l'élément graphique respectif (33) peut être déplacé directement sur le dispositif d'affichage (31), et en réaction à un tel déplacement de l'élément graphique (33) les coordonnées de la position d'approche respective (23, 25, 29) sont modifiées automatiquement en correspondance du déplacement, **caractérisé en ce que** le robot (15) est piloté de telle façon que le moyen de préhension de produit du robot (15) occupe la position d'approche respective (23, 25, 29) après une sélection d'un élément graphique respectif (33) pour régler les coordonnées de la position d'approche respective (23, 25, 29) et avant un déplacement de l'élément graphique (33).

11. Programme d'ordinateur comprenant des moyens formant code de programme, afin de mettre en oeuvre le procédé selon la revendication 10 lorsque le programme est exécuté sur un ordinateur.

12. Produit de programme d'ordinateur comprenant des moyens formant code de programme, qui sont mémorisés sur un support de données lisibles à l'ordinateur, afin de mettre en oeuvre le procédé selon la revendication 10, quand le programme d'ordinateur est exécuté sur un ordinateur.
